Europäisches Patentamt

European Patent Office

Office européen des brevets

(11) Veröffentlichungsnummer: **0 208 930**
A2

## (12) EUROPÄISCHE PATENTANMELDUNG

(21) Anmeldenummer: 86108184.2

(22) Anmeldetag: 16.06.86

(51) Int. Cl.⁴: **F 23 D 14/00, B 01 D 53/00,**
**B 01 D 53/34, F 28 D 19/00**

(30) Priorität: 18.06.85 DE 3521725

(43) Veröffentlichungstag der Anmeldung: 21.01.87
**Patentblatt 87/4**

(84) Benannte Vertragsstaaten: **AT BE CH DE FR GB IT LI LU NL SE**

(71) Anmelder: **Reininger, Nikolaus,**
**Otto-Bödecker-Strasse 16, D-3160 Lehrte (DE)**
Anmelder: **Reininger, geb. Strey, Ursula,**
**Otto-Bödecker-Strasse 16, D-3160 Lehrte (DE)**

(72) Erfinder: **Reininger, Nikolaus,**
**Otto-Bödecker-Strasse 16, D-3160 Lehrte (DE)**
Erfinder: **Reininger, geb. Strey, Ursula,**
**Otto-Bödecker-Strasse 16, D-3160 Lehrte (DE)**

(74) Vertreter: **Hammermann, Herbert, Schlegelstrasse 25,**
**D-8500 Nürnberg (DE)**

(54) Wärmeaustauscher mit Speicher.

㊐ Die Erfindung betrifft einen Wärmeaustauscher mit Speicher, bei dem die Abgase 4 nach Durchlaufen des Speichers 11 fast auf 0 °C abgekühlt und anschließend über eine Schicht 24 von Koks und eine Schicht 27 von neutralisierenden Stoffen geleitet und nach außen 31 abgeführt werden.

Fig.1

Ursula und Nikolaus Reininger

Otto-Bödecker-Straße 16, 3160 Lehrte

Wärmeaustauscher mit Speicher

Die Erfindung betrifft einen Wärmeaustauscher mit Speicher, der sich durch hohe Ausnutzung der Abwärme von Heizanlagen und weitgehende Neutralisation der Schadstoffe der Abgase auszeichnet.

Es sind Wärmeaustauscher bekannt, bei welchen die Heizschlangen aus Stahl und Kupfer durch Rohre aus Glas eretzt sind. Es sind auch Wärmeaustauscher bekannt, bei welchen eine Berieselungsanlage vorgesehen ist, welche Neutralisationsflüssigkeit wie z.B. Natronlauge in die Abgase einsprüht und dadurch eine Neutralisation der Schadstoffe der Abgase zu erreichen versucht.

Der Erfindung liegt die Aufgabe zugrunde, die Neutralisation der Abgase noch zu verbessern.

Die Aufgabe wird dadurch gelöst, daß bei einem Wärmeaustauscher irgendwelcher Bauart die Abgase nach Durchlaufen des Speichers fast auf $0^{o}C$ abgekühlt und anschließend über eine Schicht von Koks und eine Schicht von neutralisierenden Stoffen geleitet werden, die im wesentlichen $M_gO$, $CaO$, $Fe_2O_3$, $Al_2O_3$ und $SiO_2$ enthalten. Wenn die Neutralisationsstoffe beispielsweise 84 % MgO enthalten, so kann damit eine Neutralisation bis zum $P_H$-Wert 10 erreicht werden.

-2-

Falls aber CaO beispielsweise 55 % der Stoffe ausmacht, dann ist nur eine Neutralisation bis zu einem
$P_H$-Wert 7 möglich. Da aber derartige Stoffe wegen
ihrer geringen Kosten bereits als Unterbau für Straßen verwendet werden, so lassen sich damit die Kosten für die Neutralisationsstoffe sehr senken.

Da wegen der niedrigen Abgastemperatur am Ende des
Wärmeaustauschers viele Schadstoffe flüssig werden,
kann man vor dem Speicher noch Raum erübrigen, der
zusätzliche Arbeit leistet und nach der Erfindung
in den Wärmeaustauscher als ein Topf eingesetzt wird,
an dessen Boden Glasrohre als Wärmetauscher für den
Speicher vorgesehen sind, und daß der Topf nach Bedarf zusätzlich ausgestattet ist.

Was das Meterial des Topfes anbelangt, so wird man
für Gas eine Leichtmetallegierung verwenden, während der Topf bei Verwendung von Öl oder Gas auch
aus Glas bestehen kann.

Zur Tauschervergrößerung eignen sich Lamellen, die
quer oder längs des Topfes verlaufen. Der Topf erhält am Boden kreisförmige Löcher mit Ringnuten zur
Aufnahme von Dichtungsringen aus Gummi oder Silikon,
welche die Glasrohre des Speichers abdichten und halten.

Der Topf ist auch aus emailliertem Stahl möglich,
wenn es sich um Öl oder feste Brennstoffe handelt.
Bei Verwendung von Öl oder Feststoffen kann der Topf
aus Chromnickelstahl bestehen und es kann für die
Rücklaufanhebung rings um den Topf eine Schlange für
höhere Drücke vorgesehen werden, welche von stehen-

-3-

dem Wasser umgeben ist. Das obere und untere Ende der Schlange ist dabei durch Ringe abgegrenzt, von denen der untere Ring zugleich eine Scheibe mit kreisförmigen Löchern bildet, welche Ringnuten zum Festhalten der Glasrohre für den Speicherteil aufweisen.

Die Zeichnungen geben einen Wärmeaustauscher nach der Erfindung beispielsweise wieder, und zwar zeigt:

Fig. 1 einen Wärmeaustauscher nach der Erfindung im senkrechten und mittleren Längsschnitt und die

Fig. 2 zeigt eine weitere Möglichkeit der Gestaltung des in den Wärmeaustauscher eingesetzten Topfes.

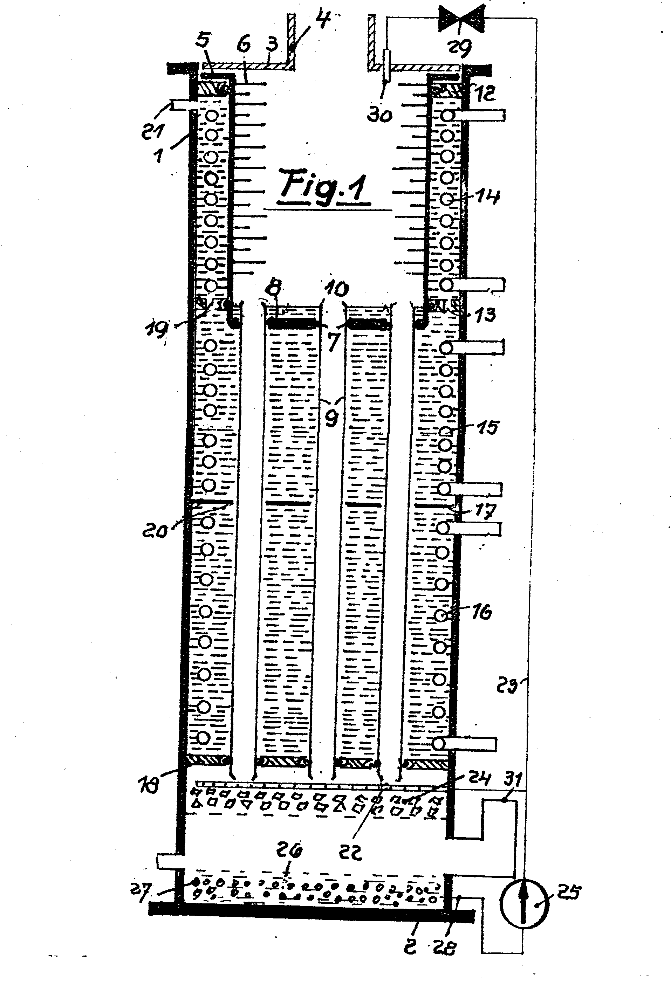

Ein Wärmeaustauscher mit Speicher gemäß der Erfindung besteht nach Fig. 1 aus einem Kunststoffrohr 1, welches am unteren Ende 2 geschlossen ist und am oberen Ende eine Scheibe 3 mit Abgaseingang 4 aus Glas oder emaillierten Stahl aufweist. In das obere Ende des Kunststoffrohres 1 eingesetzt ist ein Topf 5 mit inneren Lamellen 6 und kreisrunden Löchern 7 am Boden 8 mit Ringnuten, welche Glasrohre 9 mit nach innen geneigten Rändern 10 für den Speicherteil 11 tragen. Der Topf 5 wird von Ringen 12,13 gehalten, zwischen denen sich eine Heizschlange 14 befindet. Ebenso befinden sich Heizschlangen 15 und 16 zwischen dem Boden 8 und den Wänden 17 und 18. Der Ring 13 und die Wand 17 haben Durchlässe 19 und 20, welche ein Einfüllen und Überlaufen von Wasser durch das oben liegende Rohr 21 er-

-4-

lauben.

An die unteren Enden der Glasrohre 9 schließt sich eine Berieselungsanlage 22 an, welche durch Leitung 23 einer Koksschicht 24 über eine Kondensatpumpe 25 Kondensat 26 aus dem Raum für Neutralisationsstoffe 27 über Leitung 28 während des Betriebes des Brenners zuführt.

Die Leitung 23 führt zusätzlich über ein Magnetventil 29 zu einer Düse 30. Beim Einschalten der Düse 30 zwecks Reinigung der Glasrohre 9 sammelt sich dabei das Kondensat über dem Boden 8 des Topfes 5 und rinnt entlang den Innenseiten der Rohre 9 nach unten.

Zu dem Speicher 11 gehört die Rohrschlange 15, zu dem Topf 5 die Rohrschlange 14. Der dritten Rohrschlange 16 kommt jedoch eine besondere Bedeutung zu. Sie ist an eine Kältemaschine angeschlossen, welche dafür sorgt, daß sich die Abgase vor Erreichen der unteren Enden der Glasrohre 9 auf 4 bis $8^{\circ}C$ abkühlen, so daß sich in der Koksschicht 24 und der Neutralisationsschicht 26 die in den Abgasen enthaltenen Säuren und Schadstoffe als Flüssigkeit niederschlagen können. Die Abgase verlassen mit etwa $4-8^{\circ}C$ bei Rohr 31 den Wärmeaustauscher, ohne einen nennenswerten Rest von Schadstoffen zurückzubehalten.

Nach dem Ausführungsbeispiel gemäß Figur 1 besitzt der Topf 5 noch Lamellen 6, welche quer zur Topfwand angeordnet sind. Es ist natürlich möglich, die Lamellen auch längs zur Topfwand anzuordnen.

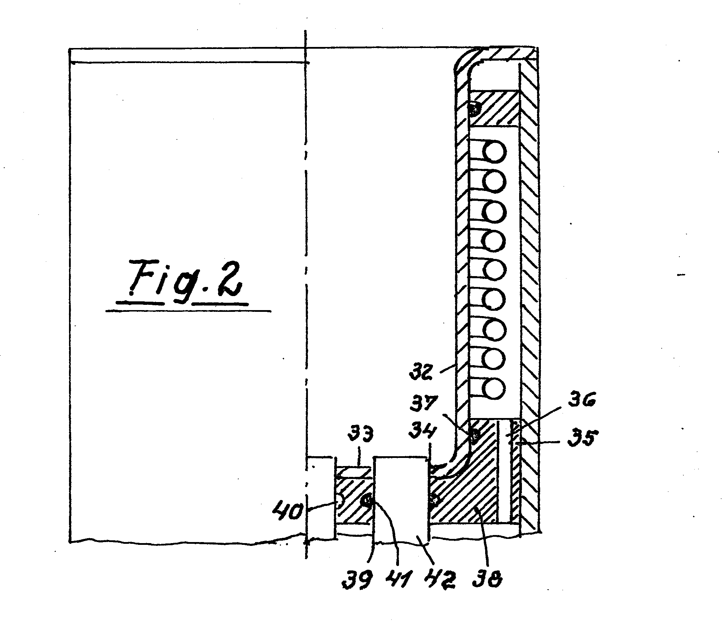

Eine dritte Lösung zeigt Figur 2, nach welcher die Innenwand 32 des Topfes ohne Lamellen ausgeführt ist und der Boden 33 nur einfache runde Löcher 34 aufweist. Der untere Haltering 35 mit der Bohrung 36 liegt abgedichtet durch einen Gummiring 37 an der Außenwand des Topfes an. Er ist am unteren Ende durch eine Scheibe 38 erweitert, deren runde Löcher 39 wieder mit Innennuten 40 versehen sind, welche Gummiringe 41 zur Abdichtung der Glasrohre 42 aufweisen.

0208930

-6-

| | |
|---|---|
| 1 Kunststoffrohr | 40 Ringnut |
| 2 unteres Ende | 41 Gummiring |
| 3 Scheibe | 42 Glasrohr |
| 4 Abgaseingang | |
| 5 Topf | |
| 6 Lamelle | |
| 7 Löcher | |
| 8 Boden | |
| 9 Glasrohr | |
| 10 nach innen angeordnete Ränder | |
| 11 Speicherteil | |
| 12,13 Leitung | |
| 14 bis 16 Heizschlangen | |
| 17,18 Wand | |
| 19,20 Durchlässe | |
| 21 Einfüll- und Überlaufrohr | |
| 22 Dosierungsanlage | |
| 23 Leitung | |
| 24 Koksschicht | |
| 25 Kondensatpumpe | |
| 26 Kondensat | |
| 27 Lagerraum für Neutralisierungsstoffe | |
| 28 Leitung | |
| 29 Magnetventile | |
| 30 Düse | |
| 31 Rohr | |
| 32 Topf | |
| 33 Boden | |
| 34 Löcher | |
| 35 Haltering | |
| 36 Bohrung | |
| 37 Gummiring | |
| 38 Scheibe | |
| 39 Bohrung | |

Ursula und Nikolaus Reininger

Otto-Bödecker-Straße 16, 3160 Lehrte

Wärmeaustauscher mit Speicher

P a t e n t a n s p r ü c h e

1.) Wärmeaustauscher mit Speicher,

d a d u r c h   g e k e n n z e i c h n e t ,

daß die Abgase (4) nach Durchlaufen des Speichers (11) fast auf $0^O$C abgekühlt und anschließend über eine Schicht (24) von Koks und eine Schicht (27) von neutralisierenden Stoffen geleitet werden, die $MgO$, $CaO$, $Fe_2O_3$, $Al_2O_3$ und $SiO_2$, vorwiegend $MgO$ oder $CaO$ enthalten.

2.) Wärmeaustauscher nach Anspruch 1,

d a d u r c h   g e k e n n z e i c h n e t ,

daß oben in den Wärmeaustauscher ein Topf (5,32) eingesetzt ist, an dessen Boden Glasrohre (9,42) als Wärmetauscher vorgesehen sind, und daß dieser Topf je nach Bedarf zusätzlich ausgestattet ist.

3.) Wärmeaustauscher nach Anspruch 2,

d a d u r c h   g e k e n n z e i c h n e t ,

daß der Topf (5) für Gasheizung aus Leichtmetall-
legierung, für Öl oder Gas aus Glas besteht, zur
Tauschervergrößerung Lamellen (6) bestizt und im
Boden (8) kreisförmige Löcher (7) mit Ringnuten
zur Aufnahme von Dichtungsringen aus Gummi oder
Silikon besitzt, welche die Glasrohre des Speichers halten.

4.) Wärmeaustauscher nach Anspruch 2,

d a d u r c h   g e k e n n z e i c h n e t ,

daß die Lamellen in Längsrichtung zur Tauscherfläche verlaufen.

5.) Wärmeaustauscher nach Anspruch 2,

d a d u r c h   g e k e n n z e i c h n e t ,

daß der Topf (5) bei Verbrennung von Öl oder Feststoffen aus emailliertem Stahl, bei Verwendung von
Gas aus Chrom-Nickel-Stahl besteht und für die Rücklaufanhebung rings um den Topf eine Schlange (14)
für höhere Drücke vorgesehen ist, welche von stehendem Wasser umgeben ist.

6.) Wärmeaustauscher nach Anspruch 5,

d a d u r c h   g e k e n n z e i c h n e t ,

daß das obere und das untere Ende der Schlange (14)
durch Ringe (12,13) abgegrenzt sind, von denen der
untere Ring (35, Fig. 2) zugleich eine Scheibe (38)
mit kreisförmigen Löchern bildet, welche Ringnuten
(40) zum Festhalten der Glasrohre (42) für den Speicherteil aufweisen.

**Fig.1**

*Fig.2*

32

37

34

33

40

36

35

39 41 42 38